# EUROPEAN PATENT SPECIFICATION

(11) **EP 3 217 739 B1**
(45) Date of publication and mention of the grant of the patent: **08.05.2019**
(21) Application number: 16159484.1
(22) Date of filing: 09.03.2016
(51) Int. Cl.: H04W 64/00, H04W 60/04, H04W 68/00, H04W 76/10

(54) **METHODS FOR ACTIVATING AND LOCALIZING A MOBILE STATION WITHOUT USER INTERACTION, MOBILE APPARATUS, VEHICLE AND SYSTEM**
VERFAHREN ZUR AKTIVIERUNG UND ORTUNG EINER MOBILSTATION OHNE BENUTZEREINWIRKUNG, MOBILE VORRICHTUNG, FAHRZEUG UND SYSTEM
PROCÉDÉS PERMETTANT D'ACTIVER ET DE LOCALISER UNE STATION MOBILE SANS INTERACTION DE L'UTILISATEUR, APPAREIL MOBILE, VÉHICULE ET SYSTÈME

(43) Date of publication of application: 13.09.2017
(73) Proprietor: Rohde & Schwarz GmbH & Co. KG, 81671 München (DE)
(72) Inventor: REIMANN, Joerg, 83043 Bad Aibling (DE); GONZALEZ-TORRES, Cristina, 81927 München (DE); FRICK, Joachim, 83024 Rosenheim (DE); GUENTHER, Andreas, 83620 Feldkirchen-Westerham (DE)
(74) Representative: Isarpatent

(56) References cited:
- EP-A2- 1 199 903
- EP-B1- 1 908 318
- WO-A1-96/25830
- WO-A1-2014/147627
- GB-A- 2 338 375
- MICHEL MOULY ET AL: "GSM The System for Mobile Communications", 1 January 1992 (1992-01-01), GSM SYSTEM FOR MOBILE COMMUNICATIONS. COMPREHENSIVE OVERVIEW OF THE EUROPEAN DIGITAL CELLULAR SYSTEMS, CELL & SYS, FRANCE, PAGE(S) 100-104,374, XP002119171, ISBN: 978-2-9507190-0-3 * chapters 8.1.3-8.1.3.1 and 8.1.4 *
- Rohde and Schwarz: "QualiPoc Freerider III, The ultimate portable benchmarker", , 3 February 2015 (2015-02-03), XP002761262, Retrieved from the Internet: URL:https://www.rohde-schwarz.com/nl/searc h/common-library_63448.html?term=QualiPoc_ Freerider3www. [retrieved on 2016-08-30]
- MOULY M ET AL: "The GSM system for mobile communications", 1 January 1992 (1992-01-01), GSM SYSTEM FOR MOBILE COMMUNICATIONS. COMPREHENSIVE OVERVIEW OF THE EUROPEAN DIGITAL CELLULAR SYSTEMS, CELL & SYS, FRANCE, PAGE(S) 366 - 384, XP002194765, ISBN: 978-2-9507190-0-3 * the whole document *
- "3rd Generation Partnership Project; Technical Specification Group Core Network and Terminals; Mobile radio interface Layer 3 specification; Core network protocols; Stage 3 (Release 13)", 3GPP STANDARD; 3GPP TS 24.008, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V13.4.0, 17 December 2015 (2015-12-17), pages 1-733, XP051046741, [retrieved on 2015-12-17]

## Description

### FIELD OF THE INVENTION

The present invention relates to a method of activating a mobile station without user interaction. The present invention further relates to a method of localizing the location of a mobile station. The present invention also relates to a mobile apparatus, a vehicle and a system comprising such a mobile apparatuses.

### TECHNICAL BACKGROUND

In modern public digital cellular mobile networks, there exists a public interest to determine whether a particular mobile station whose IMSI (International Mobile Subscriber Identity) is still in the coverage area of a particular base station of the network. For these security applications, it is necessary to set up some form of call with a specific mobile station. One main problem with conventional methods of setting up a call is that they are not covert. However, in particular for security applications a localization process shall not be noticed by the user of the mobile station.

A method of setting up a call with a mobile communication device without user interaction is described in EP 1 908 318 B1. According to the approach described in this document, a virtual base station is transmitting a call request to the mobile communication device over a wireless link, wherein the call request is adapted to cause the device to transmit a locator signal. This locator signal can then be used by a direction finder to locate the direction of the device. Channel information is also transmitted to the direction finder for identifying a channel of the locator signal based on the channel information.

The specific call set up process, which is initiated by the virtual base station, is described in paragraphs [0021] and [0022] and Table 1 of EP 1 908 318 B1. The general principle of this setup is that the virtual base station sends a call request to the mobile communication device, wherein the call request consists of the following messages (only downlink messages (to mobile station direction) are shown):
Immediate Assignment
Authentication Request
System Information Type [5 or 6]
Ciphering Mode Command
Identity Request
System Information Type [5 or 6]
Identity Request
Identity Request
System Information Type [5 or 6]
Assignment Command
System Information Type [5 or 6]

According to the approach described in EP 1 908 318 B1 the call request compulsory comprises an assignment process. However, a user of the mobile communication device will get no notice of this call request and thus of the communication between the virtual base station and the mobile communication device since the mobile communication device is blocked from producing and/or sending an alert signal. According to paragraph [0022] of EP 1 908 318 B1 this alert blocking is realized by blocking a connection control (CC) process which would otherwise cause the mobile communication device to generate the alert. In particular, the call request omits conventional connection control (CC) messages which are typically originated by the base station subsystem (BSS). Consequently, according to the approach described in EP 1 908 318 B1 no setup command is sent from the virtual base station to the mobile communication device.

Patent application EP1199903 A2 also discloses an approach in which no setup command is sent from the base station to the mobile communication device.

Patent application GB2338375 A discloses a method for a user of a mobile terminal to determine his/her position in a cheap way be using a call setup method which does not involve any sending of a call assignment command, thus not inferring any call fees.

### SUMMARY OF THE INVENTION

Against this background, the object of the present invention is to provide an improved approach for activating a mobile station unnoticed by its user.

This object is achieved according to the present invention by methods having the features of Claim 1 and 8 and/or by an apparatus having the features of Claim 11 and/or by a vehicle having the features of Claim 13 and/or by a system having the features of Claim 14.

According to the present invention, a so-called "incomplete call" to one or more specific mobile stations is set up by a master system. This incomplete call, which may also be termed as interrupted call, partial call, provides a communication link from the master system to a mobile station. The "incomplete call" can be thought of as an uncompleted incoming call setup that does not cause an alert signal at the side of the mobile station, but is still active. Decisive here is the 3GPP specification TS 24.008 V13.4.0 (2015-12).

The communication link is a so-called MTC communication link. MTC is the abbreviation of "Mobile Terminated Call" and is specified for example in section 5.2.2 of the above mentioned 3GPP specification TS 24.008 V13.4.0. MTC denotes a call within a telephone network in which the destination terminal is a mobile station, such as a cell phone, a smart phone, a tablet PC or the like.

One basic idea underlying the present invention is that when establishing the MTC communication link, the mobile station is prevented from generating and transmitting an alert signal to a user of the mobile stations, such as a haptic, visual and/or audible alert, so that the user will not recognize that a communication link is established between the master system and his mobile station. For the user his mobile station will act as an inactive mobile station. Such an incomplete call can then be used for direction finding of and/or localizing the corresponding mobile station.

In clear contrast to the solution described above with regard to EP 1 908 318 B1 where an assignment process is compulsory, an essential part of the specific incomplete or interrupted call establishment according to the present invention is the omission of the assignment process. Or in other words, the establishing of the MTC communication link is interrupted before the master system is transmitting an assignment command message to the mobile station. By not sending an assignment command message, the corresponding mobile station is prevented or even blocked from providing the alert signal which would be otherwise recognized by a user. This way, an easy and at the same time very elegant, smart possibility of unnoticed activating a wireless mobile station is provided.

The method according to the present invention manipulates standard wireless protocols, in particular the GSM protocol, to ensure that the connection control protocol does not cause the mobile station to send an alert signal. The conventional radio resource (RR) and mobility management level (MM) protocols are allowed to get to the point where a physical RF carrier is established, but the subsequent assignment processes are blocked. Consequently, a specific traffic and associated channel (such as TCH, SACCH = Slow Associated Control Channel) are established, but no indication of doing so is indicated on the mobile station.

Advantageous embodiments and developments are given in the subclaims and in the description with reference to the figuresof the drawing.

In a preferred embodiment, the step of activating the mobile station comprises the transmitting of a call request to one or more mobile stations which are in the transmission range of the master system. The call request typically includes a paging procedure. Initially, different mobile stations which are in the transmission range of the master system are invited to register themselves in the network provided by the master system. That allows the master system to know the identity of the mobile station. After that, the master system can start a MTC procedure with a paging message. This register procedure can be done by a location update or IMSI attach. Then, the master system is in the position to catch one or more desired mobile station for other purposes.

The call request and in particular the registration is adapted to cause the mobile station to transmit an identity signal wherein the transmitted identity signal comprises identity information of the mobile station. This identity information may be IMEI data (IMEI = International Mobile Station Equipment Identity), TMSI data (TMSI = Temporary Mobile Subscriber Identity) or IMSI data (IMSI = International Mobile Subscriber Identity). IMEI is a number, usually unique to identify mobile stations. The IMEI number is used by a GSM network to identify valid mobile stations and has no permanent or semi-permanent relation to the subscriber. Instead, the subscriber is identified by an IMSI number. IMSI is a unique identification associated with all cellular networks, such as mobile stations. IMSI is typically sent by the mobile station to a network master and is used to identify the user of a mobile station. TMSI is the identity that is most commonly sent between the mobile station and the corresponding network. TMSI is randomly assigned by the visitor location register (VLR) to every mobile station in the area, the moment it is switched on.

In an advantageous embodiment, the call request is a GSM based call request. The GSM-based call request enables to establish a GSM connection with a mobile station. Thus, the mobile station which is addressed by the master by means of the call request is attracted or lured to switch to a GSM based communication level. The idea underlying this embodiment is that basically all modern mobile stations, such as LTE or UMTS mobile stations, are down-compatible so that they also support GSM communication. This way, it is possible to unnoticed activate all or at least nearly all mobile stations in the proximity of the master.

In a particularly preferred embodiment, the step of establishing the MTC communication link further includes establishing a call control process (or connection control, CC) to the mobile station. In the method of EP 1 908 318 B1 mentioned at the beginning the call control process (or connection control CC in the terminology of EP 1 908 318 B1) is intentionally omitted (see paragraph [0022]) in order to avoid the generation and transmission of an alert signal. Instead, this method described in EP 1 908 318 B1 compulsory uses an assignment process. The idea of the present invention is based on a complete different finding: A call control process is preferably and intentionally established in order to allow the master system to control the established MTC communication link to the mobile station. In clear, distinct contrast to the method described in EP 1 908 318 B1, the assignment process of the present invention is blocked. Therefore, no assignment command message is sent to the mobile station. Since the MTC communication link is still established and thus the mobile station is still activated, consequently, the mobile station remains more or less permanently in a receive-state. This receive-state where the mobile station is waiting for any kind of assignment command from the master system may last more or less permanently.

In a preferred embodiment, the call control process is adapted to control the connection to the mobile station by sending a setup signal to the mobile station. This setup signal causes the mobile station to confirm the call request whilst blocking an assignment process which would otherwise cause the mobile station to provide an alert signal. As the assignment process is blocked, the mobile station is not generating an alert signal, such as a ring ton, a vibration signal, a buzzing signal, a haptic signal, a visible signal and the like. The setup process is described in section 9.3.23 of the 3GPP specification TS 24.008 V13.4.0 and the content of the setup message is disclosed in Table 9.70 of this document. According to the present invention this setup process is slightly modified such that information element 34 (signal) is not sent. The purpose of this information element 34 is to allow the master system to convey information to a mobile station regarding tones and alerting signals. By not sending this signal 34, the mobile station does not know the format of an alert signal. Consequently, the mobile station will be prevented to generate and emit any alert signal.

In a preferred embodiment, the mobile station remains in a wait state after establishing the call control process (in particular after call control confirmation) and/or the MTC communication link. Consequently, in this situation the mobile station remains activated without being recognized by the user and the MTC communication link between master system and mobile station remains established. This wait state is preferably maintained until the MTC communication link is actively terminated by the master system, the mobile station is switched off by the user, the mobile station is switched off due to low power and the like.

In a particularly advantageous embodiment, during the wait state, the mobile station sends continuous measurement results on the SACCH channel, because it is in Dedicated Mode. The mobile station enters in Dedicated Mode after receiving the Immediate Assignment message. These measurement signals may then be received, recorded and analyzed by a suitable measurement device. For example the measurement signals contain measurement data such as measured information of the signal strength and quality of the serving cells for the mobile station and optionally the signal strength and quality of at least one neighbor cell. Thus, the measurement report uplink signals are a consequence of downlink system information messages Type 5 and/or Type 6.

In a preferred embodiment, the step of activating the mobile station by establishing the MTC communication link to the mobile station is performed by a master network device. The corresponding mobile station is for example a cell phone which is compatible with the communication standard of a network of the master network device, in particular with the standard of a GSM based network. In a particularly advantageous embodiment, the master network device is a virtual base station, sometimes also referred to as virtual base station, wherein the virtual base station is adapted to emulate a wireless micro-network which is compatible with the communication standard of the mobile station.

According to a further aspect of the present invention, a method of localizing the position of a mobile station without user interaction and without recognition of the user is provided. The method employs a method of activating a mobile station, as described above. Once the MTC communication link has been established, the locating device performs localization and/or direction finding on an uplink transmission signal which is transmitted by the mobile station. This way, a mobile station activated by virtual base station may be easily localized without the recognition of the user of this mobile device.

The step of activating the mobile station comprises the transmitting of a call request to the mobile station. In a particularly advantageous embodiment, this call request is preferably adapted to cause the mobile station to transmit a locator signal whilst blocking an assignment process which would otherwise cause the mobile station to provide an alert signal. The method further comprises the step of receiving this locator signal from the mobile station over the established MTC communication link, e.g. by a suitable locator device. The locator device is then able to determine the location of the mobile station based on the received locator signals.

In one embodiment, the call request prompts the mobile station to transmit channel signals which comprise information for identifying a channel used by the mobile station. In particular, the channel signals include timeslot information and/or frequency information.

According to a particular preferred aspect of the present invention, a mobile and preferably portable apparatus comprising a master network device is provided. This master network device is advantageously compatible with the communication standard of a network of the mobile station, in particular with the standard of a GSM based network. Further, the mobile apparatus is configured to perform a method for activating and/or localizing a mobile station, as described above. The master network device is preferably a virtual base station which is advantageously adapted to emulate a wireless micro-network, wherein the emulated wireless micro-network is compatible with the communication standard of the mobile station.

In a particular preferred embodiment, the mobile apparatus further comprises a backpack which is configured and designed such to receive the master network device inside the backpack. This way, the master network device may be easily handled and carried by a user in a very comfortable way. On the other hand, the master network device is hidden inside the backpack so that other persons in the environment of the master network device are not pointed to the presence of this device.

According to a particular preferred aspect of the present invention, the mobile apparatus according to the present invention is part of and/or arranged inside a vehicle, in particular inside a motor vehicle. The vehicle may be preferably a suitable van. However, trucks, cars or like are possible. By placing the mobile network apparatus in the passenger compartment of a vehicle, the mobile apparatus may be transported very easily and in addition to that is hidden inside the vehicle. This way it is possible to provide a highly mobile network apparatus which is capable to cover a wide range of operation. By also integrating a suitable locating device inside the vehicle it is possible to provide an all-in-one system which on the one hand provides a mobile network apparatus for the establishment of an MTC connection and on the other hand provides a locating device for localizing corresponding mobile stations. According to a further, still preferred embodiment the vehicle is an aircraft, such as a plane or a helicopter. Here, the mobile network apparatus and/or locating device are placed inside the aircraft so that this allows a highly mobile and secret use of the mobile network apparatus or locating device, respectively.

According to a further aspect of the present invention, a system is provided which besides the mobile network apparatus as described above also comprises a locating device. This locating device is adapted to localize the direction and/or location of a mobile station based on channel signals which are transmitted by the mobile station.

According to a preferred embodiment, the locating device comprises a portable directional antenna. Directional antennas are used to locate a specific interference source which for example emits a high frequency signal. Directional antennas are receivers having a directional receiving characteristic which is amplified as a result of the design. In a particularly preferred development, the portable directional antenna according to the present invention is designed to detect, locate and/or document interference signals emitted by an interference source, such as the mobile station. Preferably, this is carried out fully automatically. The term "documenting" refers for example to storing all of the detected data relating to the interference source.

According to another embodiment, the locating device comprises a measurement device. The measurement device may be a spectrum analyzer, which is coupled to the directional antenna and which is designed to analyze an electromagnetic interference signal, received by the directional antenna, from an interference source. The measurement device may also comprise a distance measurement, such as a directional microphone. By means of the distance measurement device, a distance between the directional antenna and the interference source, such as a mobile station, can be determined, making it possible to improve the manner in which the position of the interference source is determined.

The above embodiments and developments can, where practical, be combined with one another in any way. Further possible embodiments, developments and implementations of the invention also include combinations that have not been mentioned explicitly of features of the invention described above or below in relation to the embodiments. In particular, a person skilled in the art will also add individual aspects as improvements or additions to the particular basic form of the present invention. The scope of the invention is defined by the appended claims.

### CONTENT OF THE DRAWING

The present invention is described in greater detail below with reference to the embodiments presented in the schematic figures of the drawings, in which:
- Fig. 1: shows a schematic flow protocol for illustrating a first embodiment of a method of activating a mobile station without user interaction according to the present invention;
- Fig. 2: shows a schematic flow protocol for illustrating a second, detailed embodiment of a method of activating a mobile station without user interaction according to the present invention;
- Fig. 3: shows a schematic flow chart for illustrating an embodiment of a method for localizing a mobile station according to the present invention;
- Fig. 4: shows a block diagram of a mobile apparatus according to the present invention;
- Fig. 5: shows a block diagram of a vehicle according to the present invention;
- Fig. 6: shows a block diagram of a system according to the present invention.

The enclosed drawings are intended to provide further understanding of the embodiments of the invention. They illustrate embodiments and, in conjunction with the description, serve to explain principles and concepts of the invention. Other embodiments and many of the stated advantages can be found from the drawings. The elements of the drawings are not necessarily shown in scale with one another.

In the figures of the drawing, any elements and components that are identical, have the same function and/or work in the same way, are each given the same reference signs, unless stated otherwise.

### DESCRIPTION OF EMBODIMENTS

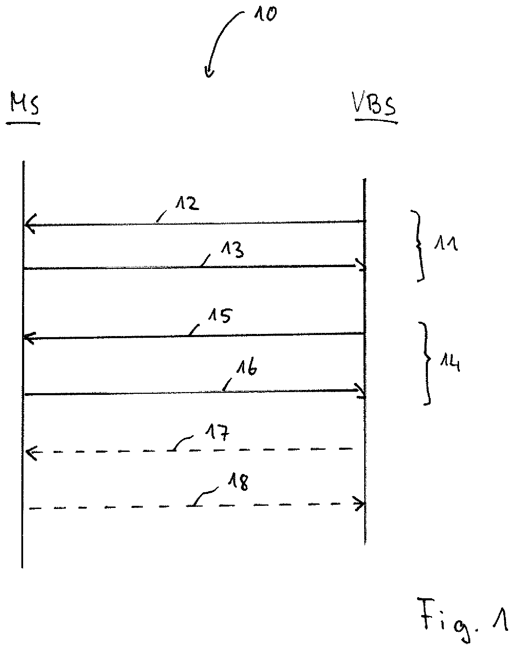

Fig. 1 shows a schematic flow chart for illustrating a first embodiment of a method of activating a wireless mobile station without user interaction according to the present invention.

A master system VBS is activating a mobile station MS by establishing a mobile terminated call (MTC) communication link 10 to the mobile station MS. In the present example the master system VBS is a virtual base station VBS (or pseudo base station) which is configured to emulate a wireless (micro-) network that is compatible with the communication standard of the mobile station MS. It is assumed that the virtual base station VBS emulates a GSM based network.

For establishing the MTC communication link 10, a call request process 11 is executed between the virtual base station VBS and the mobile station MS. In the present example, the call request 11 is a GSM based call request process 11. The virtual base station VBS initiates a paging procedure by transmitting a paging request 12 to the mobile station MS. A mobile station MS which was previously registered in the virtual base station VBS, answers to the paging request 12 with a paging response 13, so that the MTC call can be carried out. During the call request process 11, the virtual base station VBS may optionally request the identity of the mobile station (not shown in Fig. 1), such as IMSI, IMEI, TMSI, which may then be received and analyzed by the virtual base station VBS.

The method further comprises a call control process 14. The call control process 14 is used to control the connection between the virtual base station VBS and the mobile station MS. For this purpose, the virtual base station VBS sends a setup signal 15 to the mobile station MS. This setup signal 15 causes the mobile station MS to confirm 16 the requested call.

According to the present invention, no assignment process is initiated after the call request process 11 and/or the call control process 14. This way, the establishing of the MTC communication link 10 is performed without sending an assignment command message 17 from the virtual base station VBS to the mobile station MS. At this point the call setup process is on hold. Instead, the mobile station MS remains in a wait state. During this wait state the mobile station MS optionally or mandatory generates and transmits measurement signals (not shown in Fig. 1).

Additionally, the call control process 14 is modified such that the mobile station MS is prevented from generating and sending an alert signal 18, such as a ring tone. This way, the user of the mobile station MS will not recognize that his mobile station MS is currently activated and that a MTC communication link 10 is established to the virtual base station VBS.

In Fig. 1, the doted lines for the arrows 17, 18 indicate that the corresponding assignment command message 17 and the alert signal 18 are not transmitted.

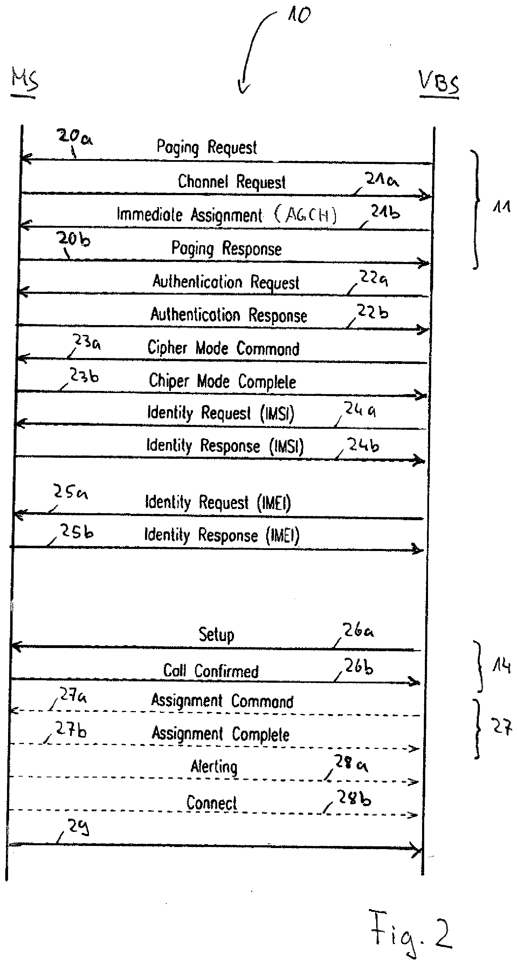

Fig. 2 shows a schematic flow protocol for illustrating a second, detailed embodiment of a method for activating a mobile station without user interaction according to the present invention.

The function of the network side, such as BTS, BSC, MSC, etc., is provided by the virtual base station VBS. The virtual base station VBS starts a normal MTC communication link establishment by sending a Paging Request message 20a and by receiving a Paging Response message 20b. Upon sending the Paging Request message 20a, the mobile station MS responds by sending a Channel Request 21a to the virtual base station VBS. After a Random access process, the virtual base station VBS sends an Immediate Assignment signal 21bto the mobile station MS.

After this paging and channels assignment procedure, optional authentication 22a, 22b, cyphering 23a, 23b and TMSI reallocation procedures (partially not shown in Fig. 2) may take place. Additionally, but not necessarily, identity request signals 24a, 25a to determine IMSI data and/or IMEI data may be send to the mobile station MS. The mobile station MS responds with corresponding identity responses 24b, 25b.

The idea of the approach according to the present invention is to drive the establishment of the MTC communication link 10 one step forward. For this purpose, as a next step a call control (CC) or call connection procedure 14 is initiated. For this call control procedure a specific setup procedure is initiated. The only preset optional parameter is the Bearer Capability Speech. The virtual base station VBS sends a Setup message 26a to the mobile station MS. The virtual base station VBS then allows the mobile station MS some time (typically 30 sec) to respond to the Setup message 26a. Typically, the mobile station MS responds to the Setup message 26a with a Call Confirm message 26b.

However, the setup procedure is modified such that the optional parameter SIGNAL is not sent by the virtual base station VBS.

If the virtual base station VBS receives the Call Confirm message 26b, then the status "mobile terminating call confirmed" is reached. For regular and conventional MTC establishment, the virtual base station VBS would as a next step now indicate an Assignment Command to the mobile station MS which traffic channel would have to be used for a communication. However, according to the present invention this assignment procedure 27 will be blocked deliberately and intentionally such that the normal MTC sequence is interrupted at this point. Consequently, the virtual base station VBS will not send an Assignment Command message 27a to the mobile station MS and the mobile station MS will consequently not respond with an Assignment Complete message 27b. Further, the mobile station MS will not send an Alert signal 28a and/or a Connect message 28b.

Consequently, the mobile station MS will remain more or less permanently in a "wait state". The mobile station MS will only periodically send Measurement Report messages 29 to the virtual base station VBS. In this wait state the mobile station MS transmits continuously measurement result messages over the SACCH channel.

During the wait state, the mobile station MS may be localized by using the Measurement Report messages 29 as locator signals.

In Fig. 2, the doted lines of the arrows 27a, 27b, 28a, 28b indicate that the corresponding assignment messages 27a, 27b, alert signals 28a and connect signals 28b are not transmitted.

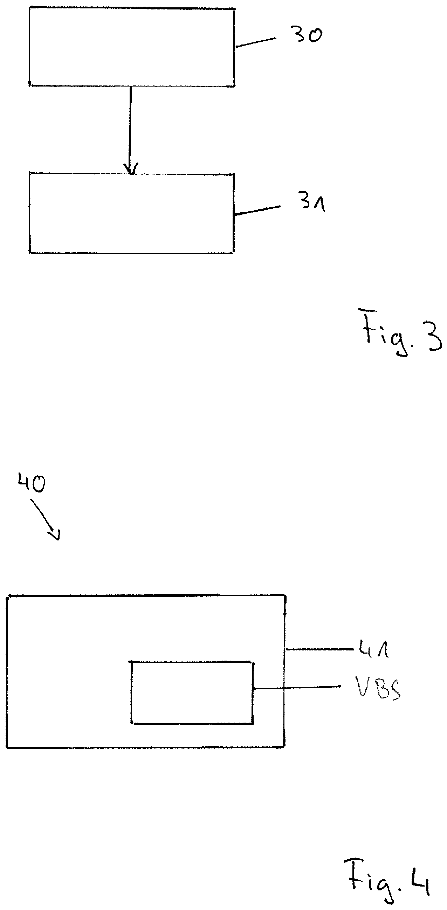

Fig. 3 shows a schematic flow chart for illustrating an embodiment of a method for localizing a mobile station according to the present invention.

In a first step 30, a mobile station MS is activated without user interaction, i.e. without being recognized by the user of the mobile station MS. For this activation step 30, a method is employed such as the one described with regard to any of the Fig. 1 or 2.

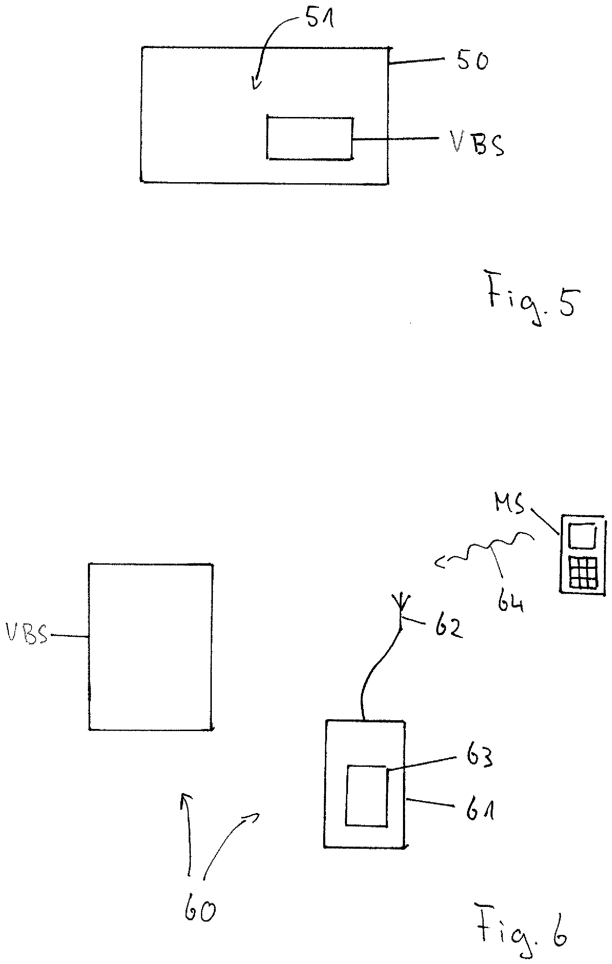

In a second step 31, the mobile station MS is localized by using the established MTC communication link. Here, a locator signal which is produced and transmitted by the mobile station MS during the first step 30 is used by a specially designed locating device (see Fig. 6).

Fig. 4 shows a block diagram of a mobile apparatus according to the present invention.

The mobile apparatus is denoted by reference numeral 40. The mobile apparatus 40 comprises a virtual base station VBS and is configured to perform a method for activating and/or localizing a mobile station MS, as described above with regard to Fig. 1 - 3. This virtual base station VBS is portable and thus mobile. The virtual base station VBS is similar in construction to a regular network base transceiver station (BTS) and also operates similar to a BTS. The virtual base station VBS is adapted to emulate a wireless micro-network where the virtual base station VBS operates as the master system of a communication to the mobile stations MS. The emulated wireless micro-network of the virtual base station VBS is compatible with the communication standard of the mobile station MS.

In the embodiment shown in Fig. 4, the virtual base station VBS is arranged within a backpack 41. This makes the mobile apparatus 40 comprising the backpack 41 and the virtual base station VBS portable by a user.

Fig. 5 shows a block diagram of a vehicle according to according to the present invention. The motor vehicle 50, such as a van, car, truck, etc., comprises a virtual base station VBS which is arranged inside the vehicle, i.e. within the passenger compartment 51 of the vehicle 50.

Fig. 6 shows a block diagram of a system according to the present invention. The system 60 comprises a virtual base station VBS and a locating device 61. This locating device 61 is adapted to localize the direction and/or location of a mobile station MS catched by the virtual base station VBS. The localization is executed by the locating device 61 based on channel signals 64 which are transmitted by the mobile station MS. For this purpose, the locating device comprises a portable directional antenna 62 and measurement device 63, such as a spectrum analyzer.

Although the present invention has been described above with reference to preferred embodiments, it is not restricted to said embodiments but can be modified in numerous different ways. In particular, in the foregoing specification the invention has been described with reference to specific examples of embodiments of the invention. It will, however, be evident that various modifications and changes may be made therein without departing from scope of the invention as set forth in the appended claims.

"Mobile station" is a terminology used in GSM standard and stands for any kind of wireless telecommunication device. A mobile station is any device used directly by an end-user to communicate. Thus, for instance, mobile stations can be understood to include in addition to conventional hand-held cell phones also smartphones, tablet PCs and laptops equipped with a mobile broadband adapter, for example mobile computers, navigational devices, PDAs (Personal Digital Assistants) and any other device with this communication functionality. The expression "mobile station" used in the present description can be understood to include any devices that have such an integrated mobile communications functionality, irrespective of whether further functionalities are integrated in these devices. For communication purposes, the mobile station is typically connected via the base transceiver station (BTS) to the base station controller (BSC). In UMTS and LTE a "mobile station" roughly corresponds to a user equipment.

Because the apparatus, devices and systems implementing the present invention are, for the most part, composed of electronic components and circuits known to those skilled in the art, details of the circuitry and its components will not be explained in any greater extent than that considered necessary as illustrated above, for the understanding and appreciation of the underlying concepts of the present invention and in order not to obfuscate or distract from the teachings of the present invention.

Skilled artisans will appreciate that the illustrations of chosen elements in the drawings are only used to help to improve the understanding of the functionality and the arrangements of these elements in various embodiments of the present invention. Also, common and well understood elements that are useful or necessary in a commercially feasible embodiment are generally not depicted in the drawings in order to facilitate the understanding of the technical concept of these various embodiments of the present invention.

### List of used reference numbers

- 10: mobile terminated call (MTC) communication link
- 11: call request (process)
- 12: paging request
- 13: paging response
- 14: call control process
- 15: setup signal
- 16: confirmation signal
- 17: assignment command message
- 18: alert signal

- 20a: Paging Request message
- 20b: Paging Response message
- 21a: Channel Request
- 21b: Immediate Assignment signal
- 22a: Authentication Request
- 22b: Authentication Response
- 23a: Chiper Mode Command
- 23b: Chiper Mode Complete
- 24a: Identity Request
- 24b: Identity Response
- 25a: Identity Request
- 25b: Identity Response
- 26a: Setup message
- 26b: Call Confirm message
- 27: Assignment procedure
- 27a: Assignment Command message
- 27b: Assignment Complete message
- 28a: Alert signal
- 28b: Connect message
- 29: Measurement Report message
- 30: first step
- 31: second step

- 40: (portable) mobile apparatus
- 41: backpack

- 50: vehicle
- 51: interior of the vehicle, passenger compartment

- 60: system
- 61: locating device
- 62: directional antenna
- 63: measurement device
- 64: channel signals

- MS: mobile station
- VBS: master system, master network device, virtual base station, virtual network operator

## Claims

1. Method of activating a wireless mobile station (MS) without user interaction, the method comprising:
activating a mobile station (MS) by establishing a mobile terminated call, MTC, communication link (10) to the mobile station (MS) wherein the establishing of the MTC communication link (10) is performed without sending an assignment command message (17, 27a) to the mobile station (MS), wherein establishing the MTC communication link (10) further includes a call control process (14), wherein the call control process (14) is adapted to control the connection to the mobile station (MS) by sending a setup signal (15, 26a) to the mobile station (MS) which causes the mobile station (MS) to confirm a call request (11) whilst blocking an assignment process (27), **characterised in that** the setup signal is modified not to send the parameter SIGNAL.

2. Method according to claim 1, wherein activating the mobile station (MS) comprises a call request (11) which includes a paging request (12).

3. Method according to claim 2, wherein the call request (11) is adapted to cause the mobile station (MS) to transmit an identity signal (24a, 25a) wherein the identity signal (24a, 25a) comprises identity information of the mobile station (MS).

4. Method according to claim 2 or 3, wherein the call request (11) is a GSM based call request (11).

5. Method according to any of the preceding claims, wherein the mobile station (MS) remains in a wait state after establishing the call control process (14) and or/the MTC communication link (10).

6. Method according to claim 5, wherein during the wait state, the mobile station (MS) constantly generates and transmits measurement signals (29).

7. Method according to any of the preceding claims, wherein activating the mobile station (MS) by establishing the MTC communication link (10) is performed by a virtual base station (VBS) which is adapted to emulate a wireless micro-network which is compatible with the communication standard of the mobile station (MS).

8. Method of localizing a mobile station (MS), the method comprising:
activating (30) a mobile station (MS) by performing a method according to any of the claims 1 to 7; and
localizing (31) the mobile station (MS) by using the established MTC communication link (10).

9. Method according to claim 8, wherein activating (30) the mobile station (MS) comprises the transmitting of a call request (11) to the mobile station (MS), wherein the call request (11) is adapted to cause the mobile station (MS) to transmit a locator signal (64) whilst blocking an assignment process (27), wherein the location of the mobile station (MS) is determined based on the locator signal (64).

10. Method according to claim 8 or 10, wherein the call request (11) prompts the mobile station (MS) to transmit channel signals (29, 64) which comprise information for identifying a channel used by the mobile station (MS).

11. Mobile apparatus (40), comprising a master network device (VBS) which is compatible with the communication standard of a network of the mobile station (MS), in particular with the standard of a GSM based network, and which is configured to perform a method according to any of the preceding claims.

12. Mobile apparatus according to claim 11, further comprising a backpack (41) which is configured and designed such to receive the master network device (VBS) inside the backpack (41).

13. Vehicle (50), in particular motor vehicle (50), comprising a mobile apparatus (40) according to any of the claims 11 or 12.

14. System (60), comprising:
a mobile apparatus (40) according to any of the claims 11 or 12; and
a locating device (61) which is adapted to determine the direction and/or localize the location of a mobile station (MS) based on channel signals (64) which are transmitted by the mobile station (MS).

## Patentansprüche

1. Verfahren zum Aktivieren einer Drahtlos-Mobilstation (MS) ohne Nutzerinteraktion, wobei das Verfahren Folgendes umfasst:
Aktivieren einer Mobilstation (MS) durch Herstellen eines Mobile Terminated Call (MTC)-Kommunikationslinks (10) zu der Mobilstation (MS), wobei das Herstellen des MTC-Kommunikationslinks (10) ohne Senden einer Zuweisungsbefehlsnachricht (17, 27a) zu der Mobilstation (MS) ausgeführt wird, wobei das Herstellen des MTC-Kommunikationslinks (10) des Weiteren einen Rufsteuerungsprozess (14) umfasst, wobei der RufSteuerungsprozess (14) dafür ausgelegt ist, die Verbindung zu der Mobilstation (MS) zu steuern, indem er ein Einrichtungssignal (15, 26a) zu der Mobilstation (MS) gesendet wird, die die Mobilstation (MS) veranlasst, eine Rufanforderung (11) zu bestätigen, während ein Zuweisungsprozess (27) blockiert wird,
**dadurch gekennzeichnet, dass** das Einrichtungssignal so modifiziert wird, nicht den Parameter SIGNAL zu senden.

2. Verfahren nach Anspruch 1, wobei das Aktivieren der Mobilstation (MS) eine Rufanforderung (11) umfasst, die eine Paging-Anforderung (12) umfasst.

3. Verfahren nach Anspruch 2, wobei die Rufanforderung (11) dafür ausgelegt ist, die Mobilstation (MS) zu veranlassen, ein Identitätssignal (24a, 25a) zu senden, wobei das Identitätssignal (24a, 25a) Identitätsinformationen der Mobilstation (MS) umfasst.

4. Verfahren nach Anspruch 2 oder 3, wobei die Rufanforderung (11) eine GSM-gestützte Rufanforderung (11) ist.

5. Verfahren nach einem der vorangehenden Ansprüche, wobei die Mobilstation (MS) nach dem Herstellen des Rufsteuerungsprozesses (14) und/oder des MTC-Kommunikationslinks (10) in einem Wartezustand verbleibt.

6. Verfahren nach Anspruch 5, wobei die Mobilstation (MS) während des Wartezustands kontinuierlich Messsignale (29) generiert und sendet.

7. Verfahren nach einem der vorangehenden Ansprüche, wobei das Aktivieren der Mobilstation (MS) durch Herstellen des MTC-Kommunikationslinks (10) durch eine virtuelle Basisstation (VBS) ausgeführt wird, die dafür ausgelegt ist, ein drahtloses Mikronetz zu emulieren, das mit dem Kommunikationsstandard der Mobilstation (MS) kompatibel ist.

8. Verfahren zum Lokalisieren einer Mobilstation (MS), wobei das Verfahren Folgendes umfasst:
Aktivieren (30) einer Mobilstation (MS) durch Ausführen des Verfahrens nach einem der Ansprüche 1 bis 7; und
Lokalisieren (31) der Mobilstation (MS) unter Verwendung des hergestellten MTC-Kommunikationslinks (10).

9. Verfahren nach Anspruch 8, wobei das Aktivieren (30) der Mobilstation (MS) das Senden einer Rufanforderung (11) zu der Mobilstation (MS) umfasst, wobei die Rufanforderung (11) dafür ausgelegt ist, die Mobilstation (MS) zu veranlassen, ein Lokatorsignal (64) zu senden, während ein Zuweisungsprozess (27) blockiert wird, wobei der Standort der Mobilstation (MS) auf der Basis des Lokatorsignals (64) bestimmt wird.

10. Verfahren nach Anspruch 8 oder 10, wobei die Rufanforderung (11) die Mobilstation (MS) auffordert, Kanalsignalen (29, 64) zu senden, die Informationen zum Identifizieren eines durch die Mobilstation (MS) verwendeten Kanals umfassen.

11. Mobile Vorrichtung (40), die umfasst eine Master-Netzwerkvorrichtung (VBS) umfasst, die mit dem Kommunikationsstandard eines Netzes der Mobilstation (MS) kompatibel ist, insbesondere mit dem Standard eines GSMgestützten Netzes, und die dafür konfiguriert ist, ein Verfahren nach einem der vorangehenden Ansprüche auszuführen.

12. Mobile Vorrichtung nach Anspruch 11, die des Weiteren einen Rucksack (41) umfasst, der dafür ausgestaltet und ausgelegt ist, die Master-Netzwerkvorrichtung (VBS) im Inneren des Rucksacks (41) aufzunehmen.

13. Fahrzeug (50), insbesondere ein Kraftfahrzeug (50), das eine mobile Vorrichtung (40) nach einem der Ansprüche 11 oder 12 umfasst.

14. System (60), das Folgendes umfasst:
eine mobile Vorrichtung (40) nach einem der Ansprüche 11 oder 12; und
eine Lokalisierungsvorrichtung (61), die dafür ausgelegt ist, auf der Basis von Kanalsignalen (64), die durch die Mobilstation (MS) gesendet werden, die Richtung und/oder den Standort einer Mobilstation (MS) zu bestimmen.

## Revendications

1. Procédé d'activation d'une station mobile sans fil (MS) sans interaction utilisateur, le procédé comprenant :
l'activation d'une station mobile (MS) en établissant une liaison de communication d'appel mobile demandé, MTC (10) avec la station mobile (MS), dans lequel l'établissement de la liaison de communication MTC (10) est réalisé sans envoyer de message d'ordre d'attribution (17, 27a) à la station mobile (MS), dans lequel l'établissement de la liaison de communication MTC (10) comporte en outre un processus de commande d'appel (14), dans lequel le processus de commande d'appel (14) est adapté pour commander la connexion avec la station mobile (MS) en envoyant un signal d'initialisation (15, 26a) à la station mobile (MS) qui amène la station mobile (MS) à confirmer une demande d'appel (11) tout en bloquant un processus
d'attribution (27), **caractérisé en ce que** le signal d'initialisation est modifié pour ne pas envoyer le paramètre SIGNAL.

2. Procédé selon la revendication 1, dans lequel l'activation de la station mobile (MS) comprend une demande d'appel (11) qui comporte une demande de recherche de personne (12).

3. Procédé selon la revendication 2, dans lequel la demande d'appel (11) est adaptée pour amener la station mobile (MS) à transmettre un signal d'identité (24a, 25a) dans lequel le signal d'identité (24a, 25a) comprend des informations d'identité de la station mobile (MS).

4. Procédé selon la revendication 2 ou 3, dans lequel la demande d'appel (11) est une demande d'appel par GSM (11).

5. Procédé selon l'une quelconque des revendications précédentes, dans lequel la station mobile (MS) reste dans un état d'attente après l'établissement du processus de commande d'appel (14) et/ou de la liaison de communication MTC (10).

6. Procédé selon la revendication 5, dans lequel pendant l'état d'attente, la station mobile (MS) génère et transmet constamment des signaux de mesure (29).

7. Procédé selon l'une quelconque des revendications précédentes, dans lequel l'activation de la station mobile (MS) en établissant la liaison de
communication MTC (10) est réalisée par une station de base virtuelle (VBS) qui est adaptée pour émuler un microréseau sans fil qui est compatible avec la norme de communication de la station mobile (MS).

8. Procédé de localisation d'une station mobile (MS), le procédé comprenant :
l'activation (30) d'une station mobile (MS) en réalisant un procédé selon l'une quelconque des revendications 1 à 7 ; et
la localisation (31) de la station mobile (MS) en utilisant la liaison de communication MTC (10) établie.

9. Procédé selon la revendication 8, dans lequel
l'activation (30) de la station mobile (MS) comprend la transmission d'une demande d'appel (11) à la station mobile (MS), dans lequel la demande d'appel (11) est adaptée pour amener la station mobile (MS) à transmettre un signal localisateur (64) tout en bloquant un processus d'attribution (27), dans lequel la localisation de la station mobile (MS) est déterminée d'après le signal localisateur (64).

10. Procédé selon la revendication 8 ou 10, dans lequel la demande d'appel (11) invite la station mobile (MS) à transmettre des signaux de canal (29, 64) qui comprennent des informations pour identifier un canal utilisé par la station mobile (MS).

11. Appareil mobile (40), comprenant un dispositif de réseau maître (VBS) qui est compatible avec la norme de communication d'un réseau de la station mobile (MS), en particulier avec la norme d'un réseau par GSM, et qui est configuré pour réaliser un procédé selon l'une quelconque des revendications précédentes.

12. Appareil mobile selon la revendication 11, comprenant en outre un sac à dos (41) qui est configuré et conçu de façon à recevoir le dispositif de réseau maître (VBS) à l'intérieur du sac à dos (41).

13. Véhicule (50), en particulier véhicule motorisé (50), comprenant un appareil mobile (40) selon l'une quelconque des revendications 11 ou 12.

14. Système (60), comprenant :
un appareil mobile (40) selon l'une quelconque des revendications 11 ou 12 ; et
un dispositif de localisation (61) qui est adapté pour déterminer la direction et/ou localiser la localisation d'une station mobile (MS) d'après des signaux de canal (64) qui sont transmis par la station mobile (MS).
